# DEMANDE DE BREVET EUROPEEN

(11) **EP 1 619 526 A1**
(43) Date de publication de la demande: **25.01.2006**
(21) Numéro de dépôt: 04405444.3
(22) Date de dépôt: 13.07.2004
(51) Int. Cl.: G02B 6/10, G02B 6/26

(54) **Fibre optique à fenêtre**

(71) Demandeur: Alpes Lasers S.A., 2001 Neuchatel (CH)
(72) Inventeur: Hvozdara, Lubos, 2000 Neuchâtel (CH); Müller, Antoine, 2000 Neuchâtel (CH); Bonetti, Yargo, 2000 Neuchâtel (CH)
(74) Mandataire: GLN

(57) **Abrégé**

Fibre optique destinée à conduire un rayonnement de longueurs d'onde comprises dans la gamme de l'infrarouge, d'une source vers un espace où ce rayonnement est appliqué, et comportant une gaine définissant une paroi réfléchissante dans la gamme de longueurs d'onde considérée. L'une au moins des extrémités de la fibre est obturée par une fenêtre, transparente dans ladite gamme de longueurs d'onde, de manière à former, avec la gaine, un logement dans lequel se trouve un fluide.

## Description

La présente invention se rapporte au domaine des guides d'onde. Elle concerne plus particulièrement des fibres optiques creuses servant de système de transmission d'un rayonnement lumineux depuis sa source jusqu'à son point d'utilisation.

Dans l'état actuel de la technique, les fibres optiques sont généralement constituées d'un coeur dans lequel se propage le rayonnement lumineux, d'une gaine entourant le coeur et sur laquelle le rayonnement lumineux est réfléchi, et d'une armature assurant la protection mécanique de l'ensemble. Les matériaux constituant le coeur et la gaine sont choisis en fonction de la gamme de longueurs d'onde à transmettre.

Dans le cas de fibres optiques creuses, le coeur est constitué d'air afin de transmettre des longueurs d'onde situées dans l'infrarouge, typiquement entre 2µm et 20µm. Ces fibres optiques sont adaptées à toutes sources émettant dans l'infrarouge, par exemple des lasers au plomb, au CO₂, des globars, ou encore des lasers à cascade quantique (comme décrit dans le document EP 1 169 760) qui sont utilisés avantageusement pour la spectroscopie laser de nombreux gaz et polluants.

Les extrémités de ces fibres optiques étant ouvertes, des échanges gazeux peuvent se produire par l'intermédiaire du coeur. Or ces échanges gazeux sont bien souvent indésirables, par exemple lorsque la source est située dans une enceinte dont l'atmosphère doit être strictement contrôlée, ou lors de l'analyse de gaz. Dans ce dernier cas, les gaz à analyser sont contenus dans une enceinte, à une pression pouvant être différente de la pression atmosphérique, et des échanges gazeux avec l'extérieur peuvent perturber fortement la mesure.

La présente invention a pour but de pallier cet inconvénient en proposant une fibre optique creuse fermée à l'une de ses extrémités ou en ses deux extrémités.

Plus précisément, l'invention concerne une fibre optique destinée à conduire un rayonnement, de longueurs d'onde comprises dans la gamme de l'infrarouge, d'une source vers un espace où ce rayonnement est appliqué. Cette fibre comporte une gaine définissant une paroi réfléchissante dans la gamme de longueurs d'onde considérée. Selon l'invention, la fibre est caractérisée en ce que l'une au moins de ses extrémités est obturée par une fenêtre, transparente dans la gamme de longueurs d'onde considérée, pour former, avec la gaine, un logement dans lequel se trouve un fluide.

De manière avantageuse, la fibre présente encore les caractéristiques suivantes :
- la fenêtre est fixée à demeure à la gaine, et
- le logement est obturé à ses deux extrémités par une fenêtre.

Un autre inconvénient lié aux fibres optiques creuses est que l'air dont le coeur est constitué, contient des gaz absorbant dans l'infrarouge, tels que la vapeur d'eau ou le dioxyde de carbone. Ces gaz présentent de nombreuses raies d'absorption parasites dans l'infrarouge, qui peuvent se superposer partiellement ou totalement à l'information utile.

La présente invention a pour but de pallier cet inconvénient en proposant une fibre optique ne contenant ni vapeur d'eau ni dioxyde de carbone ni tout autre gaz présentant des raies d'absorption parasites dans l'infrarouge.

Plus précisément, l'invention concerne une fibre optique caractérisée en ce que le fluide est un gaz enfermé à demeure dans le logement. De la sorte, les caractéristiques de ce gaz peuvent être maîtrisées. Dans une première variante, le gaz est transparent dans la gamme de longueurs d'onde considérée.

Dans une deuxième variante et spécialement dans le cas de fibres optiques utilisées pour la spectroscopie d'absorption de gaz polluants, le calibrage en longueur d'onde ou en absorbance du spectromètre optique est réalisé en référence à la position et l'aire d'une raie d'absorption d'un gaz standard.

La présente invention propose une solution compacte pour le calibrage du spectromètre optique, grâce au fait que le gaz est de type utilisé pour le calibrage d'un spectromètre optique.

Enfin, les fibres optiques creuses classiques présentent deux inconvénients majeurs liés à leurs propriétés de guidage. D'une part, couplées à un laser émettant un faisceau parallèle, elles modifient la géométrie du faisceau qui, en sortie de la fibre, n'est plus parallèle mais fortement divergent. Or, il est préférable d'avoir un faisceau parallèle ou convergent en sortie de la fibre, afin de le coupler à un détecteur. D'autre part, les faisceaux se propageant dans la fibre optique sous des angles importants mesurés par rapport à l'axe de la fibre optique subissent de nombreuses réflexions et donc de nombreuses pertes.

La présente invention a aussi pour but d'offrir un remède à ces inconvénients en proposant une fibre optique permettant de modifier la géométrie des faisceaux entrant ou sortant. A cet effet, la fenêtre est formée d'une lentille comportant avantageusement au moins une face convexe.

D'autres caractéristiques de l'invention ressortiront de la description qui va suivre, faite en regard du dessin annexé, dans lequel :
- la figure 1 représente un mode de réalisation d'une fibre optique selon l'invention ;
- la figure 2 représente un mode de réalisation d'une fibre optique étanche ;
- les figures 3 et 4 représentent un mode de réalisation d'une fibre optique avec lentille, ainsi qu'un mode de connexion de deux fibres optiques de ce type ; et
- la figure 5 représente un autre mode de réalisation d'une fibre optique avec lentille.

Sur les figures décrites ci-après, les dimensions ne sont pas représentées à l'échelle. On relèvera notamment que, dans la pratique, la longueur des fibres est sensiblement plus importante que représenté, comparativement au diamètre.

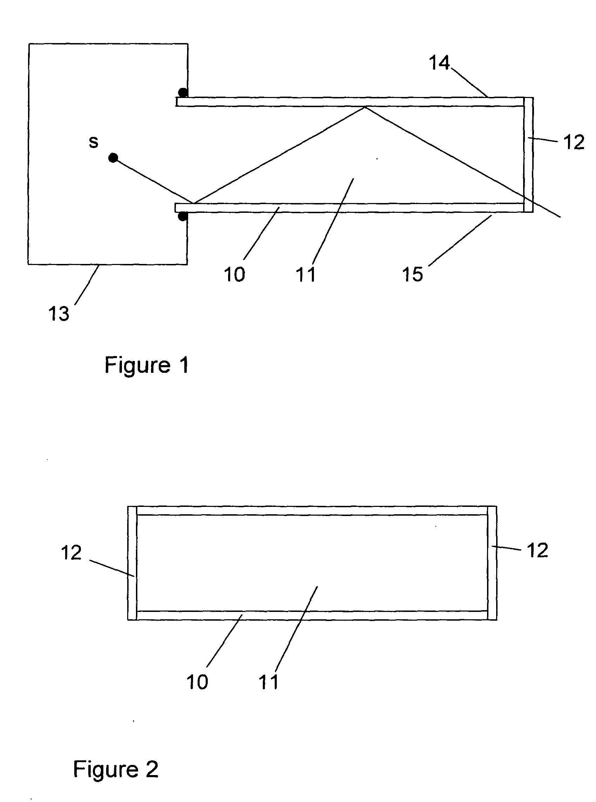

La fibre optique représentée schématiquement à la figure 1 est destinée à amener un rayon de lumière en un endroit donné, à partir d'une source S, typiquement un laser infrarouge. Elle comporte classiquement une gaine cylindrique 10 dont le diamètre et l'épaisseur sont respectivement environ égales à 600µm et 3µm. Cette gaine 10, qui entoure une partie centrale 11 appelée coeur, est constituée typiquement d'un oxyde de silicium et sa surface intérieure est recouverte d'une double couche, d'argent et de sulfure de zinc, destinée à réfléchir le rayonnement infrarouge.

Une fenêtre circulaire 12, comportant deux faces sensiblement planes et parallèles entre elles et constituée d'un matériau transparent dans la gamme de longueurs d'onde considérée, typiquement du silicium, du germanium ou de l'arséniure de gallium pour l'infrarouge, vient obturer la fibre optique à l'une de ses extrémités. La fixation de la fenêtre à la fibre optique est obtenue par soudage, brasage ou collage. Le coeur 11 forme un logement à l'intérieur duquel se trouve de l'air.

La source S disposée à l'extrémité de la fibre comportant la fenêtre 12 émet un rayonnement lumineux transmis, à l'intérieur de la fibre optique, par des réflexions multiples à la surface intérieure de la gaine 10. Cette source S est disposée à l'intérieur d'une enceinte schématiquement représentée en 13, dans une atmosphère contrôlée, afin de la préserver de toute contamination éventuelle. L'enceinte 13 est munie d'une ouverture 14 destinée à recevoir l'extrémité de la fibre 10 munie de la fenêtre 12. Un joint 15 situé en bordure du trou 14 et interposé entre l'enceinte 13 et la fibre optique garantit l'étanchéité de l'enceinte. De cette façon, aucun échange gazeux n'est possible entre l'extérieur et l'intérieur de l'enceinte et la source S est parfaitement protégée.

Une variante non représentée de ce montage consiste à disposer la source S à l'extérieur de l'enceinte étanche 13, à l'extrémité de la fibre opposée à celle comportant la fenêtre 12. Dans cette variante, le milieu à analyser, par exemple un gaz, doit être protégé de toute contamination éventuelle, et est lui-même situé dans l'enceinte étanche 13.

La fibre optique selon la figure 2 se distingue de celle représentée à la figure 1 en ce que chacune de ses deux extrémités est obturée une fenêtre 12. La fibre optique étant ainsi fermée en ses deux extrémités, le coeur 11 est totalement isolé du milieu extérieur. De cette façon, le coeur 11 peut contenir de l'air, mais également tout autre fluide gazeux ou liquide. Il peut être aussi en sous pression. En particulier, le fluide contenu dans la gaine 10 peut être avantageusement un gaz transparent dans l'infrarouge, tel que l'argon, l'azote, l'hélium ou l'oxygène, de sorte que toute absorption parasite est évitée. Une autre possibilité est d'utiliser un gaz présentant une ou plusieurs raies d'absorption dans l'infrarouge, à une pression et une concentration connues, afin d'utiliser la fibre optique elle-même pour le calibrage en absorbance et en longueur d'onde d'un spectromètre infrarouge. Une telle fibre optique contenant un gaz ou un mélange gazeux donné, à une pression donnée, peut être réalisée en soudant les fenêtres directement dans l'atmosphère gazeuse désirée.

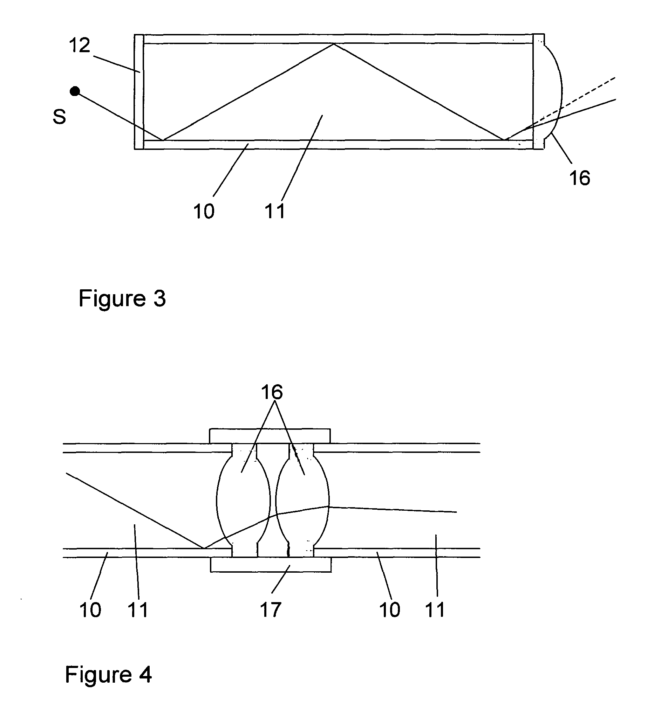

La fibre optique selon la figure 3 se distingue de la fibre optique selon la figure 2 en ce que l'extrémité opposée à la source S est obturée par une fenêtre formée d'une lentille circulaire 16 comportant une face convexe orientée vers l'intérieur de la fibre optique, et une face opposée sensiblement plane. Une variante possible de ce mode de réalisation est d'utiliser une lentille circulaire comportant deux faces sensiblement convexes. Ces lentilles possédant une ou deux faces convexes, de très petites dimensions, sont constituées d'un matériau similaire au matériau utilisé pour les fenêtres 12 à faces parallèles. Elles sont obtenues par transfert du profil convexe d'un masque de résine grâce à un procédé classique d'attaque physico-chimique par plasma, bien connu de l'homme de métier.

La lentille 16 étant disposée à l'extrémité de la fibre optique opposée à la source S, le faisceau lumineux en sortie de la fibre optique est rendu sensiblement moins divergent qu'en l'absence de lentille. Ceci permet, par exemple, de connecter deux fibres optiques terminées par une lentille 16 en limitant les pertes à la jonction des deux fibres. Pour cela, les deux lentilles sont mises en contact et les fibres sont maintenues solidaires par l'intermédiaire d'un connecteur optique 17 garantissant l'alignement des deux fibres, ainsi qu'on peut le voir sur la figure 4.

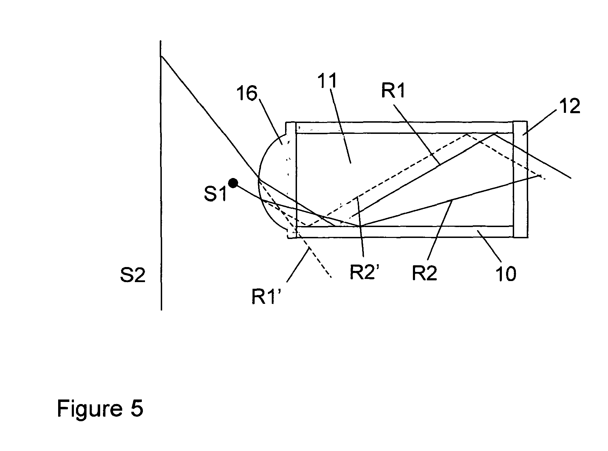

La fibre optique selon la figure 5 se distingue de la fibre optique selon la figure 2 en ce que l'extrémité côté source S est obturée par une lentille circulaire 16 comportant une face sensiblement convexe orientée vers l'extérieur de la fibre optique, et une face opposée sensiblement plane.

Une variante possible de ce mode de réalisation est d'utiliser une lentille circulaire comportant deux faces sensiblement convexes.

L'effet d'une lentille ainsi disposée à l'extrémité de la fibre optique côté source, est de réduire la divergence du faisceau entrant, que la source S soit ponctuelle (S1) ou surfacique (S2). Le faisceau entrant étant moins divergent, le nombre de réflexions à l'intérieur de la fibre optique est réduit, et par conséquent, les pertes sont réduites d'autant. Cette caractéristique est illustrée en comparant les cheminements des rayons R1 et R1', ce dernier correspondant au cheminement sans la lentille 16.

De plus, dans le cas d'une source surfacique, l'utilisation d'une lentille convexe en entrée de la fibre optique permet de capter un certain nombre de rayons qui seraient perdus sans la lentille, et donc d'augmenter l'intensité lumineuse transmise. C'est le cas du rayon R2, capté par la lentille 16, alors que sans elle, il aurait été perdu, comme le montre le rayon R2'.

Bien entendu, l'invention ne se limite pas aux configurations des figures 1 à 5, toutes les combinaisons de fenêtres et de fluides étant possibles. Par ailleurs, les matériaux constitutifs de la fibre peuvent être différents, de même que ceux de la couche réfléchissante.

## Revendications

1. Fibre optique destinée à conduire un rayonnement de longueurs d'onde comprises dans la gamme de l'infrarouge, d'une source (S) vers un espace où ce rayonnement est appliqué, comportant une gaine (10) définissant une paroi réfléchissante dans la gamme de longueurs d'onde considérée, **caractérisé en ce que** l'une au moins des extrémités de la fibre est obturée par une fenêtre (12, 16), transparente dans ladite gamme de longueurs d'onde, pour former, avec la gaine, un logement (11) dans lequel se trouve un fluide.

2. Fibre optique selon la revendication 1, **caractérisée en ce que** ladite fenêtre (12, 16) est fixée à demeure à la gaine (10).

3. Fibre optique selon la revendication 2, **caractérisée en ce que** ledit logement (11) est obturé à ses deux extrémités par une fenêtre (12, 16).

4. Fibre optique selon l'une des revendications 1 à 3, **caractérisée en ce que** ledit fluide est un gaz enfermé à demeure dans ledit logement (11).

5. Fibre optique selon la revendication 4, **caractérisée en ce que** ledit gaz est transparent dans la gamme de longueurs d'onde considérée.

6. Fibre optique selon la revendication 4, **caractérisée en ce que** ledit gaz est de type utilisé pour le calibrage d'un spectromètre optique.

7. Fibre optique selon l'une des revendications 1 à 6, **caractérisée en ce que** ladite fenêtre est formée d'une lentille (16).

8. Fibre optique selon la revendication 7, **caractérisée en ce que** ladite lentille (16) présente au moins une face convexe.
